(19) Europäisches Patentamt
European Patent Office
Office européen des brevets

(11) EP 2 040 041 B1

(12) EUROPÄISCHE PATENTSCHRIFT

(45) Veröffentlichungstag und Bekanntmachung des Hinweises auf die Patenterteilung:
29.10.2014 Patentblatt 2014/44

(51) Int Cl.:
*G01D 5/245* (2006.01) *G01D 5/244* (2006.01)

(21) Anmeldenummer: 08011308.7

(22) Anmeldetag: 21.06.2008

(54) **Positionsmesseinrichtung und Verfahren zur Positionsmessung**

Position measuring device and method for measuring position

Dispositif de mesure de position et méthode pour mesurer la position

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.09.2007 DE 102007045362**

(43) Veröffentlichungstag der Anmeldung:
**25.03.2009 Patentblatt 2009/13**

(73) Patentinhaber: **Dr. Johannes Heidenhain GmbH 83301 Traunreut (DE)**

(72) Erfinder:
• **Mayer, Elmar**
**83365 Nußdorf (DE)**
• **Oberhauser, Johann**
**83377 Vachendorf (DE)**

(56) Entgegenhaltungen:
EP-A1- 0 626 562     DE-A1- 10 244 235
JP-A- 59 183 327     US-A- 5 302 944
US-A1- 2002 100 866

**Beschreibung**

Die Erfindung betrifft eine Positionsmesseinrichtung zur Bestimmung der absoluten Position gemäß dem Anspruch 1 sowie ein Verfahren zur absoluten Positionsmessung gemäß dem Anspruch 7.

Auf vielen Gebieten werden vermehrt absolute Positionsmesseinrichtungen eingesetzt, bei denen die absolute Positionsinformation aus einer Codespur mit in Messrichtung hintereinander angeordneten Codeelementen abgeleitet wird. Die Codeelemente sind dabei in pseudozufälliger Verteilung vorgesehen, so dass eine bestimmte Anzahl von aufeinander folgenden Codeelementen jeweils ein Bitmuster bildet. Bei der Verschiebung der Abtasteinrichtung gegenüber der Codespur um ein einziges Codeelement wird bereits ein neues Bitmuster gebildet und über den gesamten absolut zu erfassenden Messbereich steht eine Folge von unterschiedlichen Bitmustern zur Verfügung.

Ein derartiger sequentieller Code wird als Kettencode oder als Pseudo-Random-Code (PRC) bezeichnet.

In der GB 2 126 444 A ist eine Positionsmesseinrichtung mit einem derartigen Code beschrieben. Die Information für jedes Codeelement dieses Codes wird durch Vergleich des Abtastsignals des Codeelementes mit einem fest vorgegebenen Referenzwert ermittelt. Eine logische "0" wird gebildet, wenn das Abtastsignal unterhalb des vorgegebenen Referenzwertes liegt und eine logische "1" wird gebildet, wenn das Abtastsignal oberhalb des vorgegebenen Referenzwertes liegt.

Eine Positionsmesseinrichtung mit einer Manchester-Codierung ist in der DE 102 44 235 A1 beschrieben. Diese Positionsmesseinrichtung weist einen Code auf, der aus einer Folge von in Messrichtung hintereinander angeordneten Codeelementen besteht, wobei jedes Codeelement wiederum jeweils aus zwei Teilbereichen besteht, die zueinander komplementär sind und in Messrichtung aufeinander folgend angeordnet sind. Dieser Code wird von einer Abtasteinrichtung mittels mehreren Detektorelementen abgetastet. In einer Vergleichseinrichtung wird jeweils aus den Abtastsignalen der Teilbereiche eines Codeelementes ein Vergleichsergebnis gebildet und mit einer Prüfeinrichtung wird geprüft, ob das Vergleichsergebnis oberhalb oder unterhalb eines fest vorgegebenen Referenzwertes liegt und abhängig davon wird für das entsprechende Codeelement als Information ein Bitwert "0" oder "1" abgeleitet. Zusätzlich wird geprüft, ob das Vergleichsergebnis innerhalb oder außerhalb eines durch einen weiteren Referenzwert vorgegebenen Bereiches liegt. Abhängig von diesem Prüfergebnis wird eine weitere Information für das Codeelement abgeleitet. Liegt das Prüfergebnis innerhalb des vorgegebenen Bereichs wird ein Fehlersignal für das entsprechende Codeelement generiert, das angibt, dass der von diesem Codeelement abgeleitete Bitwert unzuverlässig ist.

Dabei wird der Referenzwert zur Bildung des Bitwertes fest vorgegeben. Auch der Bereich zur Prüfung auf Zuverlässigkeit des Bitwertes wird einmalig fest vorgegeben.

Dies hat den Nachteil, dass bei einer Verringerung der Amplituden der analogen Abtastsignale während des Betriebs vermehrt Fehlersignale generiert werden.

Eine Positionsmesseinrichtung mit einem seriellen bzw. sequentiellen Code ist auch in der JP 1-318920 A beschrieben. Der Code besteht aus zwei parallel zueinander angeordneten Codespuren. Eine dieser Codespuren weist eine in Messrichtung angeordnete Folge von Codeelementen auf, die über den gesamten Messbereich eindeutig voneinander unterscheidbare Bitmuster bilden. Die Codeelemente der daneben angeordneten zweiten Codespur sind invers zu den Codeelementen der ersten Codespur ausgebildet und ein Bit "0" oder "1" eines Codeelementes wird jeweils durch Differenzbildung der neben einander liegenden invers zueinander ausgebildeten Codeelemente ermittelt.

In der EP 0 841 538 B1 ist eine Maßnahme offenbart, um die Vergleichsschwelle für die Abtastsignale des seriellen Codes den Umgebungsbedingungen anzupassen. Hierzu ist ein Detektor vorgesehen, der einen Ort außerhalb des sequentiellen Codes abtastet und ein Signal liefert, mit dem die Vergleichsschwelle angepasst wird.

Nachteilig dabei ist, dass die durch diesen zusätzlichen Detektor erfassten Zustände nicht den Zuständen am Ort des Codes entsprechen und es daher zu Fehlinterpretationen der Codeelemente kommen kann.

Der Erfindung liegt daher die Aufgabe zugrunde, eine absolute Positionsmesseinrichtung zu schaffen, mit der eine korrekte absolute Position mit hoher Zuverlässigkeit generiert wird und bei der die Verfügbarkeit und Zuverlässigkeit sehr hoch ist.

Diese Aufgabe wird durch die Merkmale des Anspruches 1 gelöst.

Der Erfindung liegt weiterhin die Aufgabe zugrunde, ein Verfahren zur Bestimmung einer absoluten Position anzugeben, mit dem eine möglichst fehlerfreie Erzeugung der absoluten Position ermöglicht wird.

Diese Aufgabe wird mit den Merkmalen des Anspruches 7 gelöst.

Ein Aspekt der Erfindung ist, dass der Code aus einer unregelmäßigen Abfolge von Feldern mit zueinander inversen Eigenschaften, (z. B. transparenten oder nicht transparenten Feldern oder magnetischen und nicht magnetischen Feldern) besteht und dabei jedes Codeelement nur von einem einzigen Feld gebildet wird. Dann weist die Positionsmesseinrichtung folgende Merkmale auf:

- einen Code, bestehend aus einer Folge von in Messrichtung X hintereinander angeordneten Codeelementen, bei dem mehrere aufeinander folgende Codeelemente jeweils ein Codewort mit einer absoluten Positionsinformation bilden;

- eine Abtasteinrichtung mit einer Detektoreinheit mit mehreren Detektorelementen zur Abtastung der jeweils ein Codewort bildenden Codeelemente und zur Bildung zumindest eines analogen Abtastsignals innerhalb eines Codeelementes;
- eine Auswerteeinheit mit Bewertungseinrichtungen, wobei jeweils einer der Bewertungseinrichtungen das zumindest eine Abtastsignal eines Codeelementes zugeführt ist, und mit der eine Information für das entsprechende Codeelement durch Vergleich des Abtastsignals mit zumindest einem Referenzwert bildbar ist, wobei aus der Information der mehreren abgetasteten Codeelemente die absolute Positionsinformation ableitbar ist,
- zumindest eine Anpasseinrichtung zur Bestimmung des Referenzwertes in Abhängigkeit von zumindest einem der Abtastsignale der Codeelemente.

Das damit auszuführende Verfahren ist dabei definiert durch folgende Verfahrensschritte

- Abtasten eines Codes, bestehend aus einer Folge von in Messrichtung hintereinander angeordneten Codeelementen, bei dem mehrere aufeinander folgende Codeelemente jeweils ein Codewort mit einer absoluten Position bilden;
- Erzeugen zumindest eines analogen Abtastsignals innerhalb eines jeden der abgetasteten Codeelemente;
- Vergleich des Abtastsignals mit zumindest einem Referenzwert, und Bilden einer Information für das jeweilige Codeelement in Abhängigkeit davon, und
- Bestimmen des Referenzwertes in Abhängigkeit von zumindest einem der Abtastsignale der Codeelemente.

Dabei ist der Referenzwert eine Triggerschwelle, und es wird durch den Vergleich geprüft, ob die Momentanamplitude des Abtastsignals oberhalb oder unterhalb der Triggerschwelle liegt. Abhängig davon wird dem entsprechenden Codeelement der digitale Wert "0" oder "1" als Information zugeordnet.

Ein weiterer Aspekt der Erfindung ist, dass der Code aus einer Folge von in Messrichtung hintereinander angeordneten Codeelementen besteht, wobei jedes Codeelement wiederum jeweils aus zwei Teilbereichen besteht, die zueinander inverse Eigenschaften aufweisen. Die zueinander inversen Teilbereiche eines Codeelementes sind dabei in Messrichtung aufeinander folgend angeordnet oder quer zur Messrichtung nebeneinander angeordnet. Dann weist die Positionsmesseinrichtung folgende Merkmale auf:

- eine Abtasteinrichtung mit mehreren Detektorelementen zur Abtastung mehrerer Codeelemente und zur Bildung zumindest eines analogen Abtastsignals innerhalb eines jeden Teilbereichs der abgetasteten Codeelemente;
- eine Auswerteeinheit mit Bewertungseinrichtungen, wobei jeweils einer der Bewertungseinrichtungen die Abtastsignale der Teilbereiche eines Codeelementes zugeführt sind, und mit der prüfbar ist, ob ein Vergleichsergebnis aus jeweils den Abtastsignalen der Teilbereiche eines Codeelementes oberhalb oder unterhalb zumindest eines Referenzwertes liegt und mit der abhängig davon eine Information für das entsprechende Codeelement bildbar ist, wobei
- die Auswerteeinheit eine Anpasseinrichtung zur Bestimmung des Referenzwertes in Abhängigkeit der Signalamplitude zumindest eines der Abtastsignale umfasst.

Das mit dieser Positionsmesseinrichtung durchführbare Verfahren zur absoluten Positionsmessung weist folgende Verfahrensschritte auf:

- Abtasten eines Codes, bestehend aus einer Folge von in Messrichtung hintereinander angeordneten Codeelementen, wobei die Codeelemente jeweils aus zwei Teilbereichen bestehen, die zueinander komplementär sind;
- Erzeugen zumindest eines analogen Abtastsignals innerhalb eines jeden Teilbereichs der abgetasteten Codeelemente;
- Bilden jeweils eines Vergleichsergebnisses durch Vergleichen der Abtastsignale der Teilbereiche eines Codeelementes miteinander;
- Prüfen, ob das Vergleichsergebnis oberhalb oder unterhalb zumindest eines Referenzwertes liegt, und Bilden einer Information für das jeweilige Codeelement in Abhängigkeit davon, wobei der Referenzwert in Abhängigkeit der Amplitude zumindest eines der Abtastsignale bestimmt wird.

Dabei kann der Referenzwert nur eine Triggerschwelle sein, und es wird durch den Vergleich geprüft, ob die Differenz der Momentanamplituden der Abtastsignale der beiden Teilbereiche oberhalb oder unterhalb der Triggerschwelle liegt. Abhängig davon wird dem entsprechenden Codeelement der digitale Bitwert "0" oder "1" als Information zugeordnet. Zusätzlich kann der zumindest eine Referenzwert einen Bereich definieren, und es wird durch den Vergleich geprüft, ob die Differenz der Momentanamplituden der Abtastsignale der beiden Teilbereiche innerhalb oder außerhalb dieses Bereichs liegt. Liegt die Differenz innerhalb des Bereichs, wird als Information eine Fehlermeldung für das entsprechende Codeelement generiert. Die Fehlermeldung wird generiert, wenn die Differenz einen durch den Referenzwert bestimmten Wert unterschreitet. Die Fehlermeldung ist ein Indiz dafür, dass der generierte Bitwert unzuverlässig ist. Durch Vorgabe mehrerer Referenzwerte kann auch der Grad der Zuverlässigkeit eines Bitwertes bestimmt werden.

Weitere vorteilhafte Ausgestaltungen der Erfindung sind in den abhängigen Ansprüchen angegeben.

Die Erfindung wird anhand der Zeichnungen näher erläutert, dabei zeigen:

Figur 1    eine Positionsmesseinrichtung in schematischer Darstellung;

Figur 2    das Prinzip einer Fehlerprüfung;

Figur 3    die Signale zur Fehlerprüfung gemäß Figur 2 und

Figur 4    eine weitere Positionsmesseinrichtung.

Die Erfindung wird anhand eines Codes C beschrieben, bei dem jedes Codeelement C1, C2, C3 aus zwei invers bzw. komplementär zueinander ausgebildeten Teilfeldern bzw. Teilbereichen C1A, C1B; C2A, C2B sowie C3A, C3B besteht. Diese Teilfelder können quer zur Messrichtung X nebeneinander angeordnet sein, oder in besonders vorteilhafter Weise aufeinander folgend in Messrichtung X, wie im Beispiel dargestellt. Die Teilbereiche werden aus Gründen der Übersichtlichkeit später nur noch mit A und B bezeichnet.

Die Codeelemente sind bei dieser Gegentakt-Anordnung derart ausgebildet, dass zumindest über die Länge jeweils eines Abtastbereiches, aus dem der später im Detail noch beschriebene Referenzwert gewonnen wird, ein zumindest annähernd gleiches Verhältnis von zueinander komplementären Eigenschaften vorliegt. Durch die Gegentakt-Anordnung ist gewährleistet, dass das Verhältnis immer 1:1 ist.

Die Erfindung ist aber nicht auf diesen speziellen Code beschränkt, sie ist auch einsetzbar, wenn jedes Codeelement nur aus einem einzigen Feld besteht, also nur eine der beiden zueinander komplementären Eigenschaften aufweist. Die Codeelemente sind dann derart anzuordnen, dass über die Länge jeweils eines Abtastbereiches, aus dem der später noch im Detail beschriebene Referenzwert gewonnen wird, ein gleiches Verhältnis der zwei zueinander komplementären Eigenschaften, also Codeelemente mit logischem "0" und logischem "1" vorliegt. Bei optisch abtastbarem Code somit etwa gleich viele Hellfelder als Dunkelfelder. Erreicht wird dies beispielsweise durch die in der EP 12 06 684 B1 beschriebenen Anordnung, bei der mehrere Codewörter ineinander verschränkt angeordnet sind, indem in die Folge der Codeelemente eines Codewortes Codeelemente eines weiteren Codewortes eingefügt sind und die Codeelemente des einen Codewortes zu den Codeworten des damit verschränkten weiteren Codewortes komplementär sind.

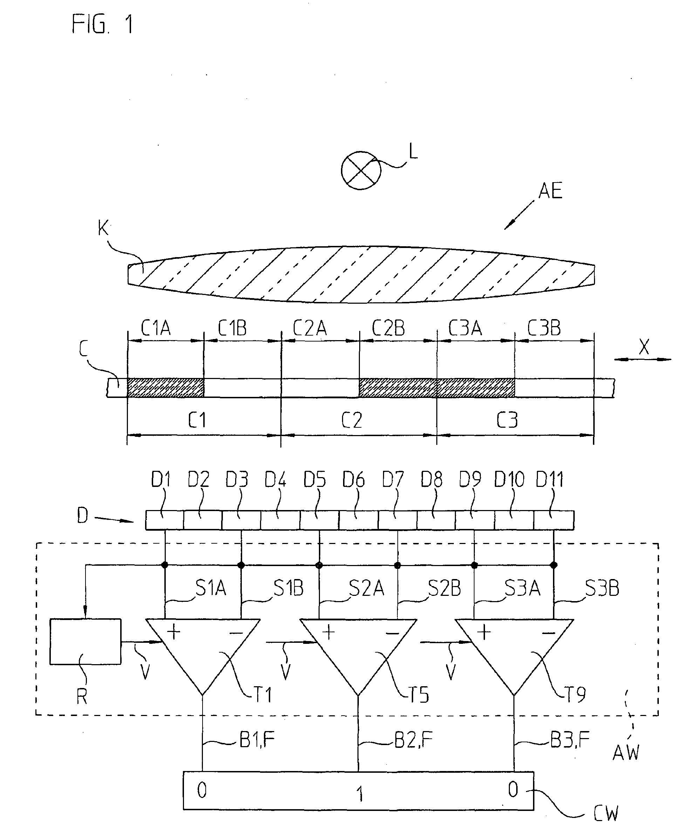

In Figur 1 ist eine erfindungsgemäß ausgestaltete Positionsmesseinrichtung schematisch dargestellt. Diese Positionsmesseinrichtung arbeitet nach dem optischen Abtastprinzip, bei dem ein Code C im Durchlichtverfahren abgetastet wird. Zur Abtastung des Codes C dient eine Abtasteinrichtung AE, die in Messrichtung X relativ zum Code C bewegbar angeordnet ist.

Der Code C besteht aus einer in Messrichtung X hintereinander angeordneten Folge von gleich langen Codeelementen C1, C2, C3. Jedes Codeelement C1, C2, C3 besteht wiederum aus zwei gleich langen in Messrichtung X nebeneinander unmittelbar aufeinander folgend angeordneten Teilbereichen A und B, die zueinander komplementär ausgebildet sind. Komplementär bedeutet dabei, dass sie inverse Eigenschaften besitzen, also beim optischen Abtastprinzip transparent und nicht transparent bzw. bei Auflicht-Abtastung reflektierend bzw. nicht reflektierend sind.

Der sequentielle Code C wird von der Abtasteinrichtung AE abgetastet, die eine Lichtquelle L enthält, deren Licht über eine Kollimatorlinse K mehrere aufeinanderfolgende Codeelemente C1, C2, C3 beleuchtet. Das Licht wird von dem Code C positionsabhängig moduliert, so dass hinter dem Code C eine positionsabhängige Lichtverteilung entsteht, die von einer Detektoreinheit D der Abtasteinrichtung AE erfasst wird.

Die Detektoreinheit D ist ein Zeilensensor bzw. ein Array mit einer in Messrichtung X angeordneten Folge von Detektorelementen D1 bis D11. Jedem Teilbereich A, B der Codeelemente C1, C2, C3 ist in jeder Relativlage zumindest ein Detektorelement D1 bis D11 eindeutig zugeordnet, so dass in jeder Relativlage der Detektoreinheit D gegenüber dem Code C ein analoges Abtastsignal S1A bis S3B aus jedem Teilbereich A, B gewonnen wird. Diese Abtastsignale S1A bis S3B werden einer Auswerteeinrichtung AW zugeführt, welche jeweils die beiden Abtastsignale S1A, S1B; S2A, S2B; S3A, S3B der beiden Teilbereiche C1A, C1B; C2A, C2B; C2A, C2B; C3A, C3B eines Codeelementes C1, C2, C3 verarbeitet, insbesondere miteinander vergleicht und durch diesen Vergleich für jedes Codeelement C1, C2, C3 eine Information in Form eines digitalen Wertes bzw. eines Bits B1, B2, B3 erzeugt. Eine Folge mehrerer digitaler Werte B1, B2, B3 ergibt ein Codewort CW welches die absolute Position definiert. Bei einer Verschiebung der Detektoreinheit D gegenüber dem Code C um die Breite bzw. Länge eines Codeelementes C1, C2, C3 wird ein neues Codewort CW erzeugt und über den absolut zu vermessenden Messbereich wird eine Vielzahl von unterschiedlichen Codewörtern CW gebildet.

Figur 1 zeigt eine Momentanstellung des Codes C relativ zur Abtasteinrichtung AE. Die Detektorelemente D1 bis D11 sind aufeinander folgend in einem Abstand mit der halben Breite eines Teilbereiches C1A bis C3B des Codes C angeordnet. Dadurch ist sichergestellt, dass in jeder Position zumindest ein Detektorelement D1 bis D11 einem Teilbereich C1A bis C3B eindeutig zugeordnet ist und nicht einen Übergang zwischen zwei Teilbereichen C1A bis C3B abtastet. In der dargestellten Position wird der Teilbereich C1A vom Detektorelement D1 und der Teilbereich C1B vom Detektorelement D3 abgetastet. Die Detektorelemente D1, D3 erfassen die Lichtverteilung und erzeugen in Abhängigkeit der Lichtintensität ein analoges Abtastsignal S1A, S1B proportional zur Lichtintensität. Da die beiden Teilbereiche C1A und C1B komplementär zueinander ausgebildet sind, ist auch die Intensität der Abtastsignale S1A und S1 B invers zueinander, die Signalpegel sind also weit voneinander beabstandet.

Dieser Signalabstand wird nun zur Erzeugung der binären Information B1 ausgenutzt, indem geprüft wird, welches der beiden Abtastsignale S1A, S1B des Codeelementes C1 größer ist. Diese Prüfung kann durch Quotientenbildung oder durch Differenzbildung erfolgen. Am Beispiel wird die Differenzbildung eingesetzt, wozu gemäß Figur 1 jeweils eine Bewertungseinrichtung T1, T5 und T9 dient. Im Ausführungsbeispiel ist die Bewertungseinrichtung jeweils ein Triggerbaustein T1, T5, T9. Der Triggerbaustein T1 erzeugt B1=0, wenn S1A kleiner S1B und B1=1, wenn S1A größer S1B ist. Es wird also geprüft, ob die Differenz größer oder kleiner einem Referenzwert O ist, wobei bei dem größer kleiner Vergleich der Referenzwert O=0 ist. In gleicher Weise werden binäre Informationen B2 und B3 durch Abtastung der Codeelemente C2, C3 und Vergleich der analogen Abtastsignale S2A, S2B; S3A, S3B der Teilbereiche C2A, C2B; C3A, C3B jeweils eines Codeelementes C2, C3 durch weitere Bewertungseinrichtungen T5, T9 gewonnen.

Einer ersten Abfolge der komplementär zueinander ausgebildeten Teilbereich A, B wird also ein erster digitaler Wert und einer zweiten Abfolge der komplementär zueinander ausgebildeten Teilbereiche A, B wird ein zweiter digitaler Wert zugeordnet. Im Beispiel wird der Abfolge opak → transparent der Wert 0 und der Abfolge transparent → opak der Wert 1 zugeordnet.

Da die beiden Teilbereiche A und B jedes Codeelementes C1, C2, C3 zueinander komplementär sind, ist der Störabstand der Abtastsignale S1A, S1 B sowie S2A, S2B und S3A, S3B sehr groß. Eine Veränderung der Lichtintensität der Lichtquelle L beeinflusst die Abtastsignale S beider Teilbereiche A und B gleichermaßen.

Aufgrund der komplementären Ausgestaltung jeweils zweier Teilbereiche A, B eines Codeelementes C1, C2, C3 müssen bei korrekter Betriebsweise der Positionsmesseinrichtung durch Abtastung dieser Teilbereich A, B jeweils analoge Abtastsignale S1A, S1B; S2A, S2B; S3A, S3B erzeugt werden, deren Differenz betragsmäßig einen Referenzwert V übersteigt. Durch Beobachtung dieses Differenzwertes ist eine gute Fehlerprüfung möglich. Die Grundlage dieser Fehlerprüfung ist, dass davon ausgegangen werden kann, dass bei Unterschreiten des Differenzwertes um einen vorgegebenen Betrag die binäre Information B1, B2, B3 unsicher ist und daher zu dieser binären Information B1, B2, B3 ein Fehlersignal F erzeugt wird oder anstelle der binären Information B1, B2, B3 nur ein Fehlersignal F erzeugt wird.

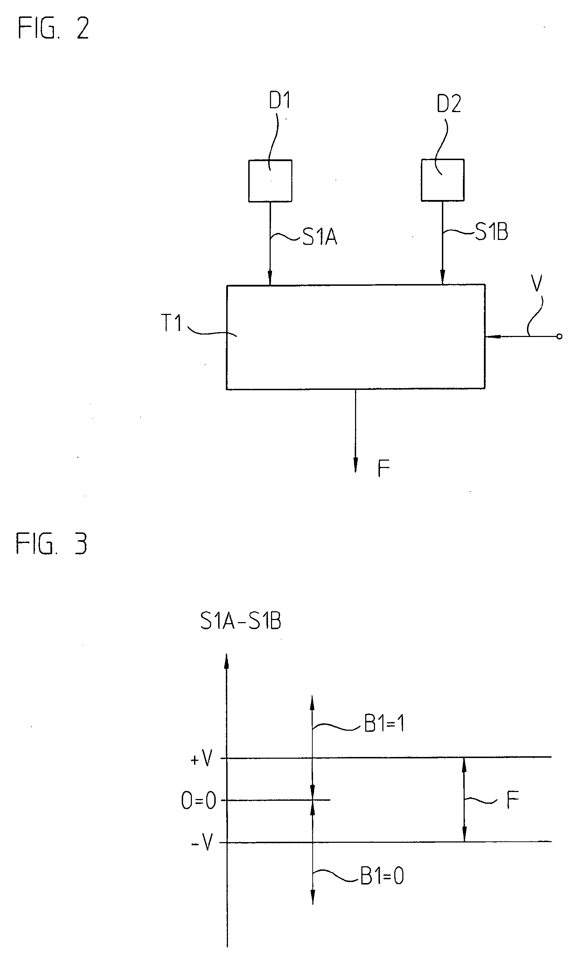

Das Prinzip der Erzeugung des Fehlersignals F ist in Figur 2 anhand der Abtastsignale S1A und S1 B dargestellt. Die analogen Abtastsignale S1A und S1 B des Codeelementes C1 werden der Bewertungseinrichtung T1 zugeführt. Die Bewertungseinrichtung T1 vergleicht S1A und S1B durch Differenzbildung (S1A - S1B) und prüft, ob der Differenzbetrag einen Referenzwert V betragsmäßig übersteigt oder nicht übersteigt. Wenn der Differenzbetrag (S1A - S1B) den Referenzwert V nicht übersteigt, also innerhalb des durch den Referenzwert vorgegebenen Bereiches von -V bis +V liegt, wird ein Fehlersignal F ausgegeben. In Figur 3 sind diese Signalverhältnisse dargestellt.

Die Funktion des Vergleichs der Abtastsignale S1A und S1B sowie die Funktion der Prüfung des Vergleichsergebnisses ist gemeinsam in der Bewertungseinrichtung T1 integriert. Die als Triggerbausteine T1, T5, T9 ausgebildeten Bewertungseinrichtungen sind dabei Fenstertrigger, auch Fensterkomparatoren genannt.

Erfindungsgemäß ist nun eine Anpasseinrichtung R vorgesehen, mit der dieser Bereich (-V bis +V) in Abhängigkeit von zumindest einem der Abtastsignale S1A bis S3B bestimmt wird. Bei dem Beispiel gemäß Figur 1 dient die Anpasseinrichtung R zur Bestimmung des Referenzwertes, hier speziell des Bereiches (-V bis +V), in Abhängigkeit aller Abtastsignale S1A bis S3B, die zur Bildung des Codewortes CW beitragen. Hierzu werden alle Abtastsignale S1A bis S3B aufsummiert, die zur Bildung des Codewortes CW beitragen. Von der Anpasseinrichtung R wird ein zu dieser Summe proportionaler Wert V bestimmt und damit der den Bereich (von -V bis +V) bestimmende Referenzwert V an die Bewertungseinrichtungen T1, T5, T9 gegeben. Die Bestimmung des Referenzwertes V kann nach linearen oder nicht linearen Funktionen erfolgen, beispielsweise:

$$V = P \times (\text{Summe aller Abtastsignale S1A bis S3B})$$

oder

$$V = P \times (\text{Summe aller Abtastsignale S1A bis S3B})^2$$

oder

$$V= P \times (\text{Summe aller Abtastsignale S1A bis S3B}) + K$$

Mit P= Proportionalitätsfaktor und K=Konstante.

Bei einer Verschmutzung des Codes C sinken die Amplituden der Abtastsignale S1A bis S3B, wodurch auch die Differenzen der Abtastsignale S1A, S1 B; S2A, S2B sowie S3A, S3B jeweils zweier Teilbereiche A, B eines Codeelementes C1, C2, C3 sich verringern. Um bei einer derartigen Beeinflussung trotzdem noch zuverlässig eine Codeinformation B1, B2, B3 zu erhalten, wird der Wert V laufend während des Betriebs, also dynamisch insbesondere proportional zur Verringerung der Amplituden verringert und somit auch der Bereich (-V bis +V) verringert. Die Verfügbarkeit der Positionsmesseinrichtung wird durch diese Maßnahme erhöht, da weniger Fehlersignale F generiert werden. Dadurch wird die Wahrscheinlichkeit eines Ausfalls der Positionsmesseinrichtung signifikant gesenkt und somit die Zuverlässigkeit erhöht. Die aufsummierten Abtastsignale S1A bis S3B sind elektrische Größen, insbesondere elektrische Ströme.

Um lokale bzw. partielle Beeinflussungen zu berücksichtigen, kann es vorteilhaft sein, wenn nicht alle Abtastsignale S1A bis S3B bei der Bildung des Referenzwertes V oder O Verwendung finden. Beispielsweise kann in einer ersten Anpasseinrichtung ein erster Referenzwert und somit ein erster Bereich aus den Abtastsignalen eines ersten Abtastbereiches des Codes C bestimmt werden sowie in einer zweiten Anpasseinrichtung ein zweiter Referenzwert und somit ein zweiter Bereich aus den Abtastsignalen eines zweiten Abtastbereiches des Codes C bestimmt werden. Der erste Referenzwert wird den Bewertungseinrichtungen zugeführt, welche die Abtastsignale aus dem ersten Abtastbereich bzw. die daraus gewonnenen Differenzen bewerten. Der zweite Referenzwert wird den Bewertungseinrichtungen zugeführt, welche die Abtastsignale aus dem zweiten Abtastbereich bzw. die daraus gewonnenen Differenzen bewerten. In dieser Art und Weise können auch mit weiteren Anpasseinrichtungen für mehrere Abtastbereiche des Codes C individuelle lokale Referenzwerte V und/oder O bestimmt werden, wobei die dazu benutzten Abtastbereiche jeweils gleiche oder unterschiedliche Längen in Messrichtung X aufweisen können. Es kann auch für jedes einzelne Codeelement ein individueller Referenzwert nur aus den Abtastsignalen der zwei Teilbereiche dieses Codeelementes gebildet werden.

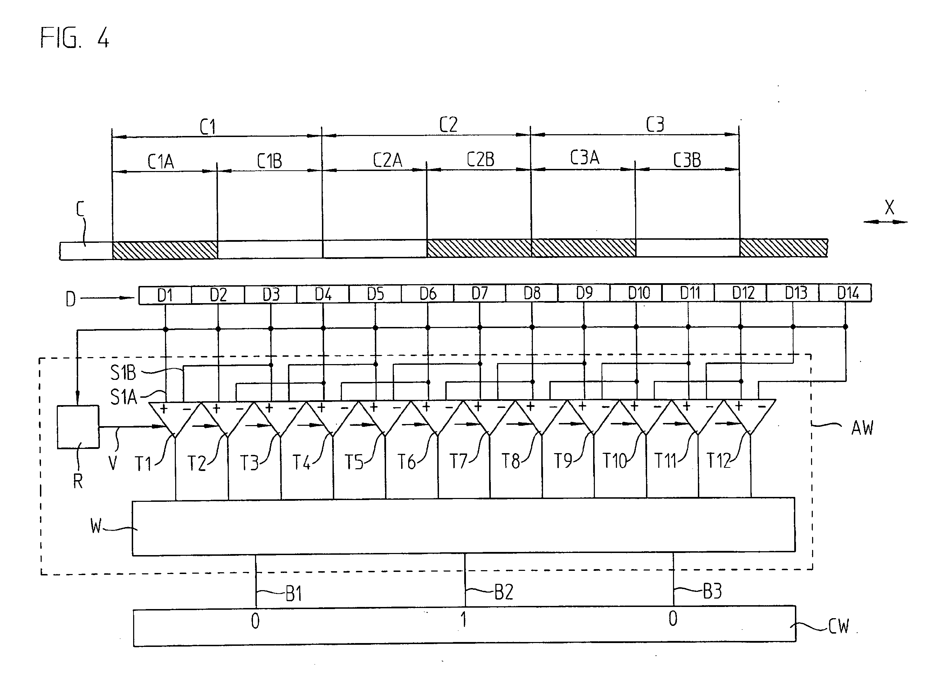

Aus Gründen der Übersichtlichkeit sind in Figur 1 nur die Triggerbausteine T1, T5, T9 dargestellt, aus denen in der dargestellten Momentanposition das Codewort CW gebildet wird. In Figur 4 ist nun die vollständige Anordnung der Bewertungseinrichtungen T1 bis T12 dargestellt. Bei der dargestellten Momentanstellung zwischen der Abtasteinrichtung AE und dem Code C dienen die Ausgänge der Bewertungseinrichtungen T1, T5 und T9 zur Bildung des Codewortes CW, da die ungeradzahligen Detektorelemente D1, D3, D5, D7, D9 und D11 eindeutigen Teilbereichen A, B von Codeelementen C1, C2, C3 gegenüberstehen, wie anhand Figur 1 im Detail erläutert. In einer um eine halbe Länge eines Teilbereiches A, B verschobenen Momentanposition dienen die Ausgänge der Bewertungseinrichtungen T2, T6 und T10 zur Bildung des nächsten Codewortes CW, da dann die geradzahligen Detektorelemente D2, D4, D6, D8, D10 und D12 eindeutigen Teilbereichen A, B von Codeelementen C1, C2, C3 gegenüberstehen.

Welche Bewertungseinrichtungen T1 bis T12 zur korrekten Bildung eines Codewortes CW Verwendung finden wird in einer Auswahleinrichtung W festgelegt. Beispiele für die Ausbildung und Funktionsweise dieser Auswahleinrichtung W sind in der bereits genannten DE 102 44 235 A1 beschrieben, auf die hier verwiesen wird.

Der Referenzwert V wird in vorteilhafter Weise im Betrieb der Positionsmesseinrichtung laufend (dynamisch, online) an die aktuellen Abtastsignale des Codes angepasst. Bei stromsparender Taktung der Positionsmesseinrichtung kann es aber sinnvoll sein, den Referenzwert erst in einem stabilen Zustand der Auswerteeinheit zu übernehmen. Es wird also nicht der am Beginn eines Taktes anstehende Referenzwert als aktueller Referenzwert übernommen, sondern ein später im Takt auftretender Referenzwert. Es kann auch vorteilhaft sein, wenn der Referenzwert zu einem vorbestimmten Zeitpunkt des Taktes abgespeichert wird und dieser abgespeicherte Referenzwert verwendet wird, bis ein neuer Referenzwert abgespeichert wird. Dabei ist es auch möglich, den aktuell zur Bildung der Information verwendeten Referenzwert aus mehreren zuvor ermittelten und abgespeicherten Referenzwerten zu bilden, beispielsweise durch Mittelwertbildung mehrerer bei vorhergehenden Takten ermittelten Referenzwerten.

Die beiden Teilbereiche A, B eines jeden Codeelementes C1, C2, C3 können optisch abtastbar ausgebildet sein, wobei dann ein Teilbereich A für das Abtastlicht transparent oder reflektierend und der anderen Teilbereich B opak oder nicht reflektierend ausgebildet ist. Die Erfindung ist aber nicht auf das optische Abtastprinzip beschränkt, die Codeelemente können auch magnetisch, induktiv oder kapazitiv abtastbar ausgestaltet sein.

Durch die laufende Berücksichtigung der momentanen Signalamplituden der Abtastsignale S wird der Referenzwert +V, -V laufend den aktuellen Eigenschaften des Codes C angepasst. Es erfolgt eine Art Nachführung bzw. Nachregelung des Referenzwertes +V, -V.

Die absolute Positionsmesseinrichtung kann zur Messung von linearen oder rotatorischen Bewegungen eingesetzt werden, wobei der Code C an einem der beweglichen Objekte und die Abtasteinrichtung AE am anderen der zu messenden Objekte angebracht ist. Der Code C kann dabei direkt an dem zu messenden Objekt angebracht sein oder auf einem Maßstab, der dann wiederum mit dem zu messenden Objekt gekoppelt ist.

Die zu messenden Objekte können dabei der Tisch und der Schlitten einer Werkzeugmaschine, einer Koordinatenmessmaschine oder der Rotor und der Stator eines Elektromotors sein.

**Patentansprüche**

1. Positionsmesseinrichtung mit

    - einem Code (C), bestehend aus einer Folge von in Messrichtung X hintereinander angeordneten Codeelementen (C1, C2, C3), bei dem mehrere aufeinander folgende Codeelemente (C1, C2, C3) jeweils ein Codewort (CW) mit einer absoluten Positionsinformation bilden;
    - einer Abtasteinrichtung (AE) mit einer Detektoreinheit (D) mit mehreren Detektorelementen (D1 bis D11) zur Abtastung der jeweils ein Codewort (CW) bildenden Codeelemente (C1, C2, C3) und zur Bildung zumindest eines Abtastsignals (S1A bis S3B) innerhalb jeweils eines der Codeelemente (C1, C2, C3);
    - einer Auswerteeinheit (AW) mit Bewertungsseinrichtungen (T1 bis T12), wobei jeweils einer der Bewertungsseinrichtungen (T1 bis T12) das zumindest eine Abtastsignal (S1A bis S3B) eines Codeelementes (C1, C2, C3) zugeführt ist, und mit der eine Information (B1, B2, B3, F) für das entsprechende Codeelement (C1, C2, C3) mittels zumindest eines Referenzwertes (+V, -V) bildbar ist,
    **gekennzeichnet durch**
    zumindest eine Anpasseinrichtung (R) zur Bestimmung des Referenzwertes (+V, -V) in Abhängigkeit von Abtastsignalen (S1A bis S3B) der Codeelemente (C1, C2, C3), wobei der Referenzwert (+V, -V) proportional der Summe der Abtastsignale (S1A bis S3B) mehrerer Codeelemente (C1, C2, C3) ist,

2. Positionsmesseinrichtung nach Anspruch 1 **dadurch gekennzeichnet, dass**

    - jedes Codeelement (C1, C2, C3) aus zwei Teilbereichen (C1A, C1B; C2A, C2B; C3A, C3B) besteht, die zueinander komplementär sind;
    - die Detektoreinheit (D) zur Abtastung der mehreren Codeelemente (C1, C2, C3) und zur Bildung zumindest eines Abtastsignais (S1A bis S3B) innerhalb eines jeden Teilbereichs (C1A, C1B; C2A, C2B; C3A, C3B) der abgetasteten Codeelemente (C1, C2, C3) ausgebildet ist;
    - jeweils einer der Bewertungsseinrichtungen (T1 bis T12) die Abtastsignale (S1A bis S3B) der Teilbereiche (C1A, C1B; C2A, C2B; C3A, C3B) eines Codeelementes (C1, C2, C3) zugeführt sind, wobei mit der Bewertungseinrichtung (T1 bis T12) prüfbar ist, ob ein Vergleichsergebnis aus jeweils den Abtastsignalen (S) der Teilbereiche (C1A, C1B; C2A, C2B; C3A, C3B) eines Codeelementes (C1, C2, C3) oberhalb oder unterhalb des zumindest einen Referenzwertes (+V, -V) liegt und mit der abhängig davon die Information (B1, B2, B3, F) für das entsprechende Codeelement (C1, C2, C3) bildbar ist.

3. Positionsmesseinrichtung nach Anspruch 2, **dadurch gekennzeichnet, dass** die Bewertungseinrichtung (T1 bis T12) zur Bildung der Differenz der Abtastsignale (S1A bis S3B) beider Teilbereiche (C1A, C1B; C2A, C2B; C3A, C3B) eines Codeelementes (C1, C2, C3) eingerichtet ist.

4. Positionsmesseinrichtung nach einem der vorhergehenden Ansprüche 2 bis 3, **dadurch gekennzeichnet, dass** die Bewertungseinrichtung (T1 bis T12) dazu ausgelegt ist als Information ein Fehlersignal (F) abzugeben, wenn die Differenz der Abtastsignale (S1A bis S3B) der Teilbereiche (C1A, C1B; C2A, C2B; C3A, C3B) eines Codeelementes (C1, C2, C3) innerhalb eines durch den zumindest einen Referenzwert (+V, -V) definierten Bereichs liegt.

5. Positionsmesseinrichtung nach einem der vorhergehenden Ansprüche 2 bis 4, **dadurch gekennzeichnet, dass** die beiden Teilbereiche (C1A, C1B; C2A, C2B; C3A, C3B) eines Codeelementes (C1, C2, C3) zueinander komplementäre optische Eigenschaften besitzen und die Codeelemente (C1, C2, C3) komplementär zueinander ausgebildete Eigenschaften aufweisen, und die Codeelemente (C1, C2, C3) derart ausgebildet und angeordnet sind, dass zumindest über die Länge jeweils eines Abtastbereiches, aus dem der Referenzwert (+V, -V) gewonnen wird, ein zumindest annähernd gleiches Verhältnis von diesen unterschiedlichen Eigenschaften vorliegt.

6. Positionsmesseinrichtung nach einem der vorhergehenden Ansprüche, **dadurch gekennzeichnet, dass** der Anpasseinrichtung (R) zumindest die Abtastsignale (S1A bis S3B) aufeinander folgender Codeelemente (C1, C2, C3) zugeführt sind, die ein Codewort (CW) bilden, und der Referenzwert (+V, -V) proportional zu der Summe der Signalamplituden dieser Abtastsignale (S1A bis S3B) ist.

**7.** Verfahren zur absoluten Positionsmessung mit folgenden Verfahrensschritten

- Abtasten eines Codes (C), bestehend aus einer Folge von in Messrichtung X hintereinander angeordneten Codeelementen (C1, C2; C3), bei dem mehrere aufeinander folgende Codeelemente (C1, C2, C3) jeweils ein Codewort (CW) mit einer absoluten Position bilden;
- Erzeugen zumindest eines Abtastsignals (S1A bis S3B) innerhalb eines jeden der abgetasteten Codeelemente (C1, C2, C3);
- Bilden einer Information (B1, B2, B3, F) für das jeweilige Codeelement (C1, C2, C3) aus dem zumindest einen Abtastsignal (S1A bis S3B) mittels zumindest eines Referenzwertes (+V, -V), **gekennzeichnet durch**
- Bestimmen des Referenzwertes (+V, -V) in Abhängigkeit von Abtastsignalen (S1A bis S3B) der Codeelemente (C1, C2, C3), wobei der Referenzwert (+V, -V) aus der Summe der analogen Abtastsignale der Teilbereiche (C1A, C1B; C2A, C2B; C3A, C3B) mehrerer Codeelemente (C1, C2, C3) bestimmt wird.

**8.** Verfahren nach Anspruch 7, **gekennzeichnet durch**:

- Vergleich des Abtastsignals (S1A bis S3B) mit dem zumindest einen Referenzwert (+V, -V), und Bilden einer Information (B1, B2, B3, F) für das jeweilige Codeelement (C1, C2, C3) in Abhängigkeit davon.

**9.** Verfahren nach Anspruch 7 oder 9, **gekennzeichnet durch**:

- Abtasten mehrere Codeelemente (C1, C2, C3), die jeweils aus zwei Teilbereichen (C1A. C1B; C2A, C2B; C3A, C3B) bestehen, die zueinander komplementär sind;
- Erzeugen zumindest eines Abtastsignals (S1A bis S3B) innerhalb eines jeden Teilbereichs (A, B) dieser Codeelemente (C1, C2, C3);
- Bilden jeweils eines Vergleichsergebnisses **durch** Vergleichen der Abtastsignale (S1A bis S3B) der Teilbereiche (C1A, C1B; C2A, C2B; C3A, C3B) jeweils eines Codeelementes (C1, C2, C3) miteinander;
- Prüfen, ob das Vergleichsergebnis oberhalb oder unterhalb zumindest des Referenzwertes (+V, -V) liegt, und Bilden der Information für das jeweilige Codeelement (C1, C2, C3) in Abhängigkeit davon.

**10.** Verfahren nach Anspruch 9, **dadurch gekennzeichnet, dass** der Vergleich eine Differenzbildung der analogen Abtastsignale (S1A bis S3B) der Teilbereiche (C1A, C1B; C2A, C2B; C3A, C3B) ist.

**11.** Verfahren nach Anspruch 10, **dadurch gekennzeichnet, dass** als Information für das jeweilige Codeelement ein Fehlersignal (F) gebildet wird, wenn die Differenz der Abtastsignale der Teilbereiche (C1A, C1B; C2A, C2B; C3A, C3B) dieses Codeelementes (C1, C2, C3) innerhalb eines durch den zumindest einen Referenzwert (+V, -V) vorgegebenen Bereichs liegt.

**Claims**

**1.** Position measuring device, comprising

- a code (C) consisting of a sequence of code elements (C1, C2, C3) consecutively arranged in the measuring direction X, in which a plurality of successive code elements (C1, C2, C3) respectively form a code word (CW) with an absolute position information item;
- a scanning device (AE) with a detector unit (D) having a plurality of detector elements (D1 to D11) for scanning the code elements (C1, C2, C3) respectively forming a code word (CW), and for forming at least one scanning signal (S1A to S3B) within each one of the code elements (C1, C2, C3);
- an evaluation unit (AW) with evaluation devices (T1 to T12), the at least one scanning signal (S1A to S3B) of one code element (C1, C2, C3) respectively being fed to one of the evaluation devices (T1 to T12) with which an information item (B1, B2, B3, F) for the corresponding code element (C1, C2, C3) can be formed by means of at least one reference value (+V, -V),
**characterized by**
at least one adjustment device (R) for determining the reference value (+V, -V) as a function of scanning signals (S1A to S3B) of the code elements (C1, C2, C3), the reference value (+V, -V) being proportional to the sum of the scanning signals (S1A to S3B) of the plurality of code elements (C1, C2, C3), and
- the code elements (C1, C2, C3) having characteristics configured to be mutually complementary, and the code elements (C1, C2, C3) being configured and arranged in such a way that, at least over the length of a respective scanning region from which the reference value (+V, -V) is obtained, there is an at least approximately equal ratio of said different characteristics.

2. Position measuring device according to Claim 1, **characterized in that**

   - each code element (C1, C2, C3) consists of two subareas (C1A, C1B; C2A, C2B; C3A, C3B) which are mutually complementary;
   - the detector unit (D) is configured to scan the plurality of code elements (C1, C2, C3) and to form at least one scanning signal (S1A to S3B) within a respective subarea (C1A, C1B; C2A, C2B; C3A, C3B) of the scanned code elements (C1, C2, C3);
   - in each case one of the evaluation devices (T1 to T12) is fed the scanning signals (S1A to S3B) of the subareas (C1A, C1B; C2A, C2B; C3A, C3B) of a code element (C1, C2, C3), it being possible to use the evaluation device (T1 to T12) to check whether a comparison result from each of the scanning signals (S) of the subareas (C1A, C1B; C2A, C2B; C3A, C3B) of a code element (C1, C2, C3) is above or below the at least one reference value (+V, -V), and with which it is possible to form as a function thereof the information item (B1, B2, B3, F) for the corresponding code element (C1, C2, C3).

3. Position measuring device according to Claim 2, **characterized in that** the evaluation device (T1 to T12) is set up to form the difference between the scanning signals (S1A to S3B) of the two subareas (C1A, C1B; C2A, C2B; C3A, C3B) of a code element (C1, C2, C3).

4. Position measuring device according to one of the preceding Claims 2 and 3, **characterized in that** the evaluation device (T1 to T12) is configured to output an error signal (F) as information when the difference between the scanning signals (S1A to S3B) of the subareas (C1A, C1B; C2A, C2B; C3A, C3B) of a code element (C1, C2, C3) is within a region defined by the at least one reference value (+V, -V).

5. Position measuring device according to one of the preceding Claims 2 to 4, **characterized in that** the two subareas (C1A, C1B; C2A, C2B; C3A, C3B) of a code element (C1, C2, C3) have mutually complementary optical characteristics.

6. Position measuring device according to one of the preceding claims, **characterized in that** the adjustment device (R) is fed at least the scanning signals (S1A to S3B) of successive code elements (C1, C2, C3) which form a code word (CW), and the reference value (+V, -V) is proportional to the sum of the signal amplitudes of said scanning signals (S1A to S3B).

7. Method for absolute position measurement having the following method steps:

   - scanning a code (C) consisting of a sequence of code elements (C1, C2, C3) consecutively arranged in the measuring direction X, in which a plurality of successive code elements (C1, C2, C3) respectively form a code word (CW) with an absolute position;
   - generating at least one scanning signal (S1A to S3B) within each of the scanned code elements (C1, C2, C3);
   - forming an information item (B1, B2, B3, F) for the respective code element (C1, C2, C3) from the at least one scanning signal (S1A to S3B) by means of at least one reference value (+V, -V), **characterized by**
   - determining the reference value (+V, -V) as a function of scanning signals (S1A to S3B) of the code elements (C1, C2, C3), the reference value (+V, -V) being determined from the sum of the analogue scanning signals of the subareas (C1A, C1B; C2A, C2B; C3A, C3B) of a plurality of code elements (C1, C2, C3).

8. Method according to Claim 7, **characterized by**:

   - comparing the scanning signal (S1A to S3B) with the at least one reference value (+V, -V), and forming an information item (B1, B2, B3, F) for the respective code element (C1, C2, C3) as a function thereof.

9. Method according to Claim 7 or 8, **characterized by**:

   - scanning a plurality of code elements (C1, C2, C3) which respectively consist of two subareas (C1A, C1B; C2A, C2B; C3A, C3B) which are complementary to one another;
   - generating at least one scanning signal (S1A to S3B) within each subarea (A, B) of said code elements (C1, C2, C3);

- respectively forming a comparison result by comparing with one another the scanning signals (S1A to S3B) of the subareas (C1A, C1B; C2A, C2B; C3A, C3B) of a respective code element (C1, C2, C3) ;
- checking whether the comparison result is above or below at least the reference value (+V, -V), and forming the information for the respective code element (C1, C2, C3) as a function thereof.

10. Method according to Claim 9, **characterized in that** the comparison is a formation of the difference between the analogue scanning signals (S1A to S3B) of the subareas (C1A, C1B; C2A, C2B; C3A, C3B).

11. Method according to Claim 10, **characterized in that** an error signal (F) is formed as information for the respective code element when the difference between the scanning signals of the subareas (C1A, C1B; C2A, C2B; C3A, C3B) of said code element (C1, C2, C3) is within a range prescribed by the at least one reference value (+V, -V).


**Revendications**

1. Dispositif de mesure de position comprenant :

- un code (C) constitué d'éléments de code (C1, C2, C3) disposés les uns à la suite des autres dans la direction de mesure X, dans lequel une pluralité d'éléments de code se suivant les uns les autres (C1, C2, C3) forment respectivement un mot de code (CW) ayant une information de position absolue ;
- un dispositif de balayage (AE) comportant une unité de détection (D) comprenant une pluralité d'éléments détecteurs (D1 à D11) destinés à balayer les éléments de code (C1, C2, C3) formant respectivement un mot de code (CW) et à former au moins un signal de balayage (S1A à S3B) à l'intérieur de l'un, respectif, des éléments de code (C1, C2, C3) ;
- une unité d'évaluation (AW) comprenant des dispositifs d'estimation (T1 à T12), dans lequel ledit au moins un signal de balayage (S1A à S3B) d'un élément de code (C1, C2, C3) est délivré à l'un, respectif, des dispositifs d'estimation (T1 à T12), et au moyen de laquelle ladite une information (B1, B2, B3, F) peut être établie pour l'élément de code correspondant (C1, C2, C3) au moyen d'au moins une valeur de référence (+V, -V), **caractérisé par**
au moins un dispositif d'adaptation (R) destiné à déterminer la valeur de référence (+V, -V) en fonction de signaux de balayage (S1A à S3B) des éléments de code (C1, C2, C3), dans lequel la valeur de référence (+V, - V) est proportionnelle à la somme des signaux de balayage (S1A à S3B) d'une pluralité d'éléments de code (C1, C2, C3), et les éléments de code (C1, C2, C3) présentent des propriétés conçues de manière complémentaire les unes des autres, et les éléments de code (C1, C2, C3) sont conçus et agencés de telle manière qu'on ait au moins un rapport approximativement identique de ces propriétés différentes sur au moins la longueur d'une région de balayage respective à partir de laquelle la valeur de référence (+V, -V) est obtenue.

2. Dispositif de mesure de position selon la revendication 1, **caractérisé en ce que**

- chaque élément de code (C1, C2, C3) est constitué de deux sections (C1A, C1B ; C2A, C2B ; C3A, C3B) qui sont complémentaires l'une de l'autre ;
- l'unité de détection (D) destinée à balayer la pluralité d'éléments de code (C1, C2, C3) et à former au moins un signal de balayage (S1A à S3B) est réalisée à l'intérieur d'une section respective (C1A, C1B ; C2A, C2B ; C3A, C3B) des éléments de code balayés (C1, C2, C3) ;
- les signaux de balayage (S1A à S3B) des sections (C1A, C1B ; C2A, C2B ; C3A, C3B) d'un élément de code (C1, C2, C3) sont respectivement délivrés à l'un des dispositifs d'estimation (T1 à T12), dans lequel il est possible de vérifier au moyen du dispositif d'estimation (T1 à T12) si un résultat de comparaison obtenu à partir des signaux de balayage respectifs (S) des sections (C1A, C1B ; C2A, C2B ; C3A, C3B) d'un élément de code (C1, C2, C3) se situe au-dessus ou en dessous de l'au moins une valeur de référence (+V, -V) et avec lequel il est possible d'établir en fonction de cela l'information (B1, B2, B3, F) destinée à l'élément de code correspondant (C1, C2, C3).

3. Dispositif de mesure de position selon la revendication 2, **caractérisé en ce que** le dispositif d'estimation (T1 à T12) est conçu pour établir la différence des signaux de balayage (S1A à S3B) des deux sections (C1A, C1B ; C2A, C2B ; C3A, C3B) d'un élément de code (C1, C2, C3).

4. Dispositif de mesure de position selon l'une quelconque des revendications 2 à 3, **caractérisé en ce que** le dispositif d'estimation (T1 à T12) est apte à délivrer en tant qu'information un signal d'erreur (F) lorsque la différence des

**10**

EP 2 040 041 B1

signaux de balayage (S1A à S3B) des sections (C1A, C1B ; C2A, C2B ; C3A, C3B) d'un élément de code (C1, C2, C3) se situe à l'intérieur d'une région définie par l'au moins une valeur de référence (+V, -V).

5. Dispositif de mesure de position selon l'une quelconque des revendications 2 à 4 précédentes, **caractérisé en ce que** les deux sections (C1A, C1B ; C2A, C2B ; C3A, C3B) d'un élément de code (C1, C2, C3) possèdent des propriétés optiques complémentaires l'une de l'autre.

6. Dispositif de mesure de position selon l'une quelconque des revendications précédentes, **caractérisé en ce qu'**au moins les signaux de balayage (S1A à S3B) d'éléments de code se suivant mutuellement (C1, C2, C3) et forment un mot de code (CW) sont délivrés au dispositif d'adaptation (R) et **en ce que** la valeur de référence (+V, -V) est proportionnelle à la somme des amplitudes de signal desdits signaux de balayage (S1A à S3B).

7. Procédé de mesure de la position absolue comprenant les étapes de procédé consistant à

- balayer un code (C) constitué d'une suite d'éléments de code (C1, C2, C3) disposés les uns à la suite des autre dans la direction de mesure X, dans lequel une pluralité d'éléments de code se suivant les uns les autres (C1, C2, C3) forment respectivement un mot de code (CW) ayant une position absolue ;
- générer au moins un signal de balayage (S1A à S3B) à l'intérieur de l'un, respectif, des éléments de code balayés (C1, C2, C3) ;
- établir une information (B1, B2, B3, F) pour l'élément de code respectif (C1, C2, C3) à partir de l'au moins un signal de balayage (S1A à S3B) au moyen d'au moins une valeur de référence (+V, -V) , **caractérisé par** le fait de :
- déterminer la valeur de référence (+V, -V) en fonction de signaux de balayage (S1A à S3B) des éléments de code (C1, C2, C3), dans lequel la valeur de référence (+V, -V) est déterminée à partir de la somme des signaux de balayage analogiques des sections (C1A, C1B ; C2A, C23 ; C3A, C3B) d'une pluralité d'éléments de code (C1, C2, C3).

8. Procédé selon la revendication 7, **caractérisé par** le fait de :

- comparer le signal de balayage (S1A à S3B) à l'au moins une valeur de référence (+V, -V), et établir en fonction de cela une information (B1, B2, B3, F) pour l'élément de code respectif (C1, C2, C3).

9. Procédé selon la revendication 7 ou 8, **caractérisé par** le fait de :

- balayer une pluralité d'éléments de code (C1, C2, C3) complémentaires les uns des autres qui sont respectivement constitués de deux sections (C1A, C1B ; C2A, C2B ; C3A, C3B) ;
- générer au moins un signal de balayage (S1A à S3B) à l'intérieur de l'une, respective, des sections (A, B) desdits éléments de code (C1, C2, C3) ;
- établir respectivement un résultat de comparaison par comparaison les uns aux autres des signaux de balayage (S1A à S3B) des sections (C1A, C1B ; C2A, C2B ; C3A, C3B) d'un élément de code respectif (C1, C2, C3) ;
- vérifier si le résultat de comparaison se situe au-dessus ou en dessous d'au moins la valeur de référence (+V, -V), et établir en fonction de cela l'information destinée à l'élément de code respectif (C1, C2, C3).

10. Procédé selon la revendication 9, **caractérisé en ce que** la comparaison consiste en l'établissement d'une différence entre les signaux de balayage analogiques (S1A à S3B) des sections (C1A, C1B ; C2A, C2B ; C3A, C3B).

11. Procédé selon la revendication 10, **caractérisé en ce qu'**on établit en tant qu'information destinée à l'élément de code respectif, un signal d'erreur (F) lorsque la différence des signaux de balayage des sections (C1A, C1B ; C2A, C2B ; C3A, C3B) dudit élément de code (C1, C2, C3) se situe à l'intérieur d'une région prédéterminée par l'au moins une valeur de référence (+V, -V).

FIG. 1

FIG. 2

FIG. 3

FIG. 4

EP 2 040 041 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2126444 A
- DE 10244235 A1
- JP 1318920 A
- EP 0841538 B1
- EP 1206684 B1